# EUROPÄISCHE PATENTSCHRIFT

(11) **EP 1 194 884 B1**
(45) Veröffentlichungstag und Bekanntmachung des Hinweises auf die Patenterteilung: **09.04.2003**
(21) Anmeldenummer: 00943610.6
(22) Anmeldetag: 16.05.2000
(51) Int. Cl.: G06K 19/073

(54) **VERFAHREN ZUR VERHINDERUNG WIDERRECHTLICHER BENUTZUNG VON CHIPKARTEN**
METHOD FOR PREVENTING THE UNAUTHORIZED USE OF CHIP CARDS
PROCEDE PERMETTANT D'EMPECHER L'UTILISATION NON AUTORISEE DE CARTES A PUCE

(30) Priorität: 21.05.1999 DE 19923472
(43) Veröffentlichungstag der Anmeldung: 10.04.2002
(73) Patentinhaber: Infineon Technologies AG, 81669 München (DE)
(72) Erfinder: SCHEPERS, Jörg, 83700 Rottach-Egern (DE)
(74) Vertreter: Epping Hermann & Fischer
(86) Internationale Anmeldenummer: DE0001544
(87) Internationale Veröffentlichungsnummer: WO00072252

(56) Entgegenhaltungen:
- EP-A- 0 481 881
- EP-A- 0 718 794
- GB-A- 2 098 766
- US-A- 5 461 372

## Beschreibung

Die vorliegende Erfindung betrifft ein Verfahren, mit dem festgestellt werden kann, ob ein manipulatorischer Angriff auf eine Chipkarte oder Smartkarte erfolgt.

Weil Chipkarten einerseits im regulären Gebrauch zuverlässig sein sollen und andererseits eine unbefugte Benutzung der Karte detektiert werden muß, entsteht das Problem, daß ein Sicherungssystem gegen Angriffe nur schlecht mit einer praktikablen Empfindlichkeit eingestellt werden kann. Mit einem sensorischen Sicherungssystem soll erreicht werden, abnormale Betriebszustände, die bei einem Angriff ausgenutzt werden können, zu detektieren bzw. manipulatorische Angriffe selbst zu erkennen. Sind die Sensoren zu empfindlich eingestellt, so daß sie schon bei geringen Abweichungen vom Normalzustand ansprechen, reagieren sie auch auf unvermeidbare geringe Schwankungen der Betriebsbedingungen. Dadurch wird die Zuverlässigkeit des betreffenden Produktes unter Umständen stark eingeschränkt, zum Beispiel, wenn in einem Kartenleser schon geringfügige kurzfristige Stromschwankungen zu einem Reset des Controllers führen. Daher ist es erforderlich, bei der Einstellung der Empfindlichkeit solcher Sicherungssensoren Kompromisse einzugehen.

In der WO 98/18102 ist ein Verfahren zum Schutz von elektronischen Recheneinheiten, insbesondere von Chipkarten, gegen unerwünschten Zugriff angegeben. Die möglicherweise einem Angriff ausgesetzte Seite der Recheneinheit ist mit einer Ummantelung mit inhomogenen Eigenschaften versehen, an der Messwerte an zumindest einer festgelegten Messstelle ermittelt werden, nachdem an einer festgelegten Signalaufgabestelle an die Ummantelung von der Einheit definierte Signale angelegt wurden. Mit den Messwerten wird eine für eine unversehrte Ummantelung zum Zeitpunkt der Vermessung charakteristische Signatur gebildet. Anspruch 1 ist gegen dieses Dokument abgegrenzt.

In der US 5,412,318 ist eine Vorrichtung zur Detektion von Manipulationsversuchen einer Vorrichtung zum Lesen und Beschreiben von Chipkarten angegeben. Diese Vorrichtung umfasst eine Resonatoreinheit, die mit einem Kontaktelement der Lese- und Schreibvorrichtung verbunden ist und eine stehende Welle erzeugt, sowie eine Messvorrichtung. Wenn eine weitere Vorrichtung in betrügerischer Absicht angeschlossen wird, werden die elektrischen Eigenschaften, zum Beispiel die Eingangsimpedanz, des Resonators verändert. Die Messvorrichtung vergleicht einen Messwert der betreffenden Größe mit einem Bezugswert und überprüft so die Unversehrtheit der Chipkarte.

Aus der FR 2 693 014 war ebenfalls ein Sensor zur Erkennung einer unerlaubt an der Chipkarte befestigten Leitung bekannt.

In der GB 2 098 766 A war ein Feuermelder bekannt, bei dem eine Mehrzahl von Sensoren unterschiedlicher Empfindlichkeiten manuell oder automatisch über einen Controller eingestellt werden. Damit soll ein Fehlalarm vermieden werden.

In der US 5,461,372 ist ein Verfahren zur Änderung der Sicherheitsstufen in einem Sicherheitssystem beschrieben.

Aufgabe der vorliegenden Erfindung ist es, ein Verfahren anzugeben, mit dem ein unbefugter Angriff auf eine Chipkarte zuverlässig detektiert und verhindert werden kann, ohne daß der normale bestimmungsgemäße Gebrauch der Karte beeinträchtigt wird.

Diese Aufgabe wird mit dem Verfahren mit den Merkmalen des Anspruches 1 gelöst. Ausgestaltungen ergeben sich aus den abhängigen Ansprüchen.

Das erfindungsgemäße Verfahren sieht eine gestufte Angriffssensorik vor, bei der vorgeschaltete Sensoren nicht in jedem Fall sofort einen Reset oder eine ähnliche gezielte Gegenmaßnahme auslösen, sondern nur nachgeschaltete Sensoren mit höherer Empfindlichkeit aktivieren. Das Problem der eingeschränkten Zuverlässigkeit ist damit behoben, da selbst auf geringfügige Angriffssignale adäquat reagiert werden kann. Eine solche mehrstufige Sensoren-Hierarchie kann insbesondere auch auf unterschiedliche Signalkombinationen gezielt reagieren. Es kann zum Beispiel ein optischer Sensor mit hoher Empfindlichkeit nachgeschaltete elektrische Sensoren mit höherer Empfindlichkeit aktivieren oder die Empfindlichkeit solcher Sensoren vergrößern.

Das erfindungsgemäße Verfahren bedient sich einer Sensoren-Hierarchie, mit der eine mittelbare Reaktion auf abnormale Betriebszustände möglich ist. Die verwendeten Sensoren werden sukzessive in einen höheren Sensibilisierungszustand geschaltet und/oder es werden sukzessive empfindlichere Sensoren aktiviert. Auf diese Weise werden insbesondere auch Kombinationen von unterschiedlichen Angriffssignalen, wie zum Beispiel optisch und elektrisch oder thermisch, auswertbar gemacht. Das Verfahren erlaubt daher eine gestufte Reaktion auf Angriffsszenarien.

Im Prinzip sind beliebige Kombinationen von unterschiedlichen Sensoren mit verschiedenen Empfindlichkeiten in dem erfindungsgemäßen Verfahren einsetzbar. So kann zum Beispiel das gehäufte Auftreten kleiner Spikes in den Betriebssignalen dazu benutzt werden, die Empfindlichkeit der Spikesensoren zu erhöhen, oder es ist möglich, beim gleichzeitigen Auftreten von relativ kleinen Spikes in Kombination mit einer Betriebsspannung, die an der Grenze der Spannungssensoren liegt, einen Angriffsalarm und damit zum Beispiel einen Reset auszulösen.

## Patentansprüche

1. Verfahren zur Detektierung eines manipulatorischen Angriffs auf eine Smartcard,
- bei dem verschiedene Sensoren zur Detektion abnormaler Betriebszustände verwendet werden, wobei
- das Auftreten eines abnormalen Betriebszustandes von einem Teil der Sensoren erfasst wird,
**dadurch gekennzeichnet, dass**
- nach dem Erfassen eines abnormalen Betriebszustandes Sensoren mit höherer Empfindlichkeit aktiviert werden.

2. Verfahren nach Anspruch 1,
bei dem verschiedene Sensoren unterschiedlicher Empfindlichkeiten verwendet werden und nach dem Erfassen eines abnormalen Betriebszustandes sukzessive empfindlichere Sensoren aktiviert werden.

3. Verfahren nach Anspruch 1,
bei dem verschiedene Sensoren unterschiedlich einstellbarer Empfindlichkeiten verwendet werden und nach dem Erfassen eines abnormalen Betriebszustandes die verwendeten Sensoren sukzessive in einen höheren Sensibilisierungszustand geschaltet werden.

## Claims

1. Method for detecting an attempt at manipulatory intervention in a smart card,
- in which various sensors for detecting abnormal operating states are used,
- the occurrence of an abnormal operating state being sensed by some of the sensors, and
- **characterized in that**, after an abnormal operating state has been sensed, sensors with a relatively high degree of sensitivity are activated.

2. Method according to Claim 1, in which various sensors with different degrees of sensitivity are used and successively more sensitive sensors are activated after an abnormal operating state has been sensed.

3. Method according to Claim 1, in which various sensors with sensitivities which can be set at different degrees are used, and the sensors which are used are successively switched to a higher sensitization state after an abnormal operating state has been sensed.

## Revendications

1. Procédé de détection d'une attaque frauduleuse d'une carte intelligente,
- dans lequel on utilise divers détecteurs de détection d'états anormaux de fonctionnement, dans lequel
- on détecte l'apparition d'un état anormal de fonctionnement par une partie des capteurs,
**caractérisé en ce que**
- après la détection d'un état anormal de fonctionnement, on active des capteurs ayant une sensibilité plus grande.

2. Procédé suivant la revendication 1,
dans lequel on utilise divers capteurs de sensibilités différentes et après la détection d'un état anormal de fonctionnement on active des capteurs successivement de plus en plus sensibles.

3. Procédé suivant la revendication 1,
dans lequel on utilise divers capteurs dont les sensibilités peuvent être réglées différemment et après la détection d'un état anormal de fonctionnement on met les capteurs utilisés successivement dans un état de sensibilisation plus grande.
